# FASCICULE DE BREVET EUROPEEN

(11) **EP 0 474 066 B1**
(45) Date de publication et mention de la délivrance du brevet: **14.09.1994**
(21) Numéro de dépôt: 91114168.7
(22) Date de dépôt: 23.08.1991
(51) Int. Cl.: F04C 29/10, G01M 3/22

(54) **Dispositif de pompage d'un gaz par une pompe à palettes et à joint d'huile et application aux détecteurs de fuites à hélium**
Gaspumpenanlagebetrieben durch eine Flügelzellenpumpe mit Flüssigkeitsdichtung und die Verwendung von Leckagedetektoren für Helium
Gas pumping apparatus by a liquid sealed vane pump and application to helium leakage detectors

(30) Priorité: 28.08.1990 FR 9010709
(43) Date de publication de la demande: 11.03.1992
(73) Titulaire: ALCATEL CIT, 75008 Paris (FR)
(72) Inventeur: Barret, Gilles, F-74000 Annecy (FR); Chicherie, Jean-Pierre, F-74940 Annecy le Vieux (FR); Paquet, Jean-Marc, F-74940 Annecy le Vieux (FR)
(74) Mandataire: Weinmiller, Jürgen

(56) Documents cités:
- EP-A- 0 356 877
- FR-A- 1 254 176
- FR-A- 1 364 063

## Description

La présente invention concerne un dispositif de pompage d'un gaz par une pompe à palettes et à joint d'huile et son application aux détecteurs de fuites à hélium.

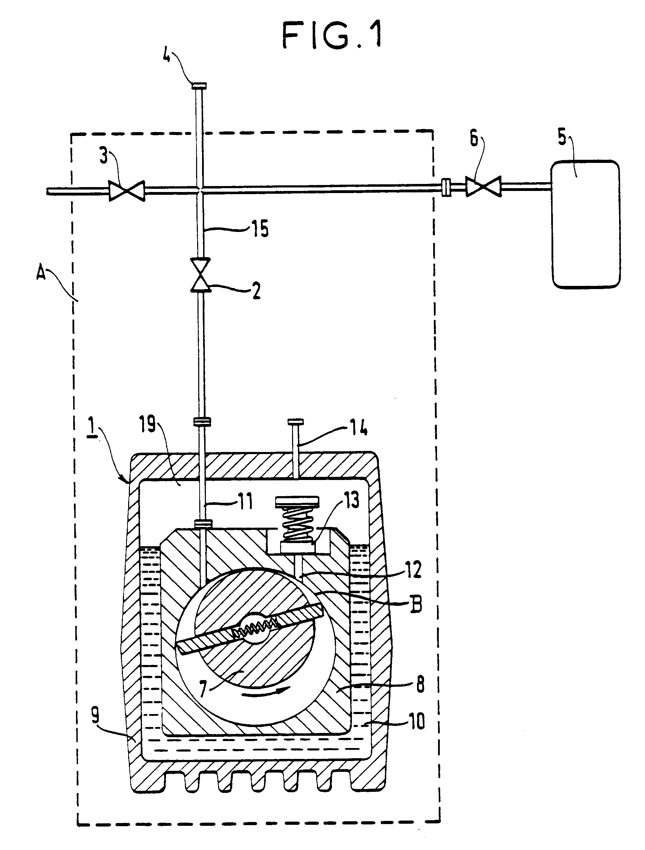

Elle permet de dépolluer une station de pompage du gaz pompé, ce qui est particulièrement intéressant dans le cas des détecteurs de fuites à hélium. Un tel détecteur de fuites comporte essentiellement deux parties comme le montre la figure 1 :
- une station de pompage comportant une pompe à palettes 1, une vanne d'isolement 2 de la pompe à palettes et une vanne 3 d'entrée d'air, enfin une entrée 4 destinée à être reliée à une enceinte à tester, cette entrée 4 pouvant être également obturée ;
- un analyseur de gaz 5 comportant une vanne d'entrée 6 et relié à la station de pompage.

L'analyseur 5 détecte et mesure la quantité d'hélium qui pénètre dans l'appareil par l'entrée 4. Un tel détecteur est par exemple connu par le brevet français 1 474 137.

On procède à l'essai de la façon suivante :
Les vannes 3 et 6 sont fermées, la vanne 2 est ouverte et l'entrée 4 est reliée à l'enceinte à tester. On met en route la pompe 1 pour vider l'enceinte. Ensuite, on ferme la vanne 2. On ouvre alors la vanne d'entrée 6 et on effectue la mesure en promenant un jet d'hélium contre les parois de l'enceinte à tester. Si cette enceinte comporte une fuite, de l'hélium pénètre dans l'enceinte et de là passe par l'entrée 4 jusqu'à l'analyseur 5 qui détecte et mesure la présence d'hélium et donc la fuite de l'enceinte à tester.

Cependant, il arrive parfois que l'analyseur 5 détecte un signal de fuite alors même que l'on n'a pas encore "arrosé" d'hélium l'enceinte à tester. Cela provient d'une pollution de l'installation lors, par exemple, d'un essai antérieur où de l'hélium a été introduit dans le circuit. Lors du nouvel essai il se produit donc un dégazage des parois et des composants de l'appareil qui provoque ce "bruit de fond" qui laisse croire à une fuite.

Une solution pour pallier à cette pollution est, la vanne 3 étant fermée et la vanne 2 étant ouverte, de pomper avec la pompe à palettes 1 pendant un certain temps qui dans certains cas, peut être très long car ce "bruit de fond" est parfois très important. On peut donc pomper comme cela pendant deux heures. En effet, on pensait que la pollution provenait surtout du dégazage des parois et de l'huile contenue dans la cuve de la pompe à palettes et que ce dégazage était donc très lent.

Il semble cependant, que la cause principale provient d'une concentration d'hélium dans l'espace libre 19 situé dans la cuve de la pompe à palettes au-dessus de la surface de l'huile.

Il faudrait donc dépolluer régulièrement cet espace libre. Dans ce but, diverses solutions ont été proposées qui cherchent à introduire de l'air ou un gaz neutre dans la pompe à vide. C'est le cas du document EP 0 158 168. Cependant, toutes ces solutions sont génératrices de modifications perturbant le fonctionnement de la pompe à vide (systèmes anti-retour particuliers, pression dans les étages de la pompe, et...) ou sont lourdes dans leur utilisation (ajout de diverses vannes à piloter lors du pompage).

Le joint d'huile, destiné à diminuer les fuites de la pompe à vide et à améliorer ainsi ses performances en pression limite, est constamment renouvelé. Différents systèmes sont possibles pour renouveler ce joint d'huile. On connaît entre autres un dispositif de lubrification forcée comprenant une pompe à huile équipée d'un système mélangeur du gaz de cuve à l'huile injectée, qui provient de l'huile de cuve, pour constituer un système antibruit. Le but de ce système est de créer un fluide de lubrification compressible et amortisseur rendant la pompe à vide plus silencieuse lorsqu'elle pompe sur de très faibles quantités de gaz, voire sur elle-même.

Afin de trouver une solution simple et peu coûteuse à ce problème de pollution, on a imaginé, selon la présente invention, d'utiliser un dispositif de lubrification forcée équipé d'un système antibruit pour dépolluer la cuve contenant la pompe à vide. Pour ce faire, le gaz mélangé à l'huile injectée n'est plus, comme il était d'usage, le gaz de cuve mais un gaz (de l'air par exemple) aspiré à l'extérieur de la cuve.

L'invention a donc pour objet un dispositif de pompage d'un gaz par une pompe à vide du type à palettes et à joint d'huile, la pompe à vide étant plongée dans une cuve fermée et partiellement remplie d'huile, le dispositif comprenant également une pompe à huile pour renouveler le joint d'huile et disposée dans la cuve, la pompe à huile étant équipée d'un dispositif antibruit permettant de mélanger de l'huile destinée à constituer le joint d'huile à un gaz d'antibruit, le pompage du gaz par la pompe à vide se faisant par une conduite d'aspiration traversant la paroi de la cuve, le refoulement du gaz pompé par la pompe à vide se faisant par une soupape anti-retour dans l'espace de la cuve situé au-dessus du niveau de l'huile de remplissage, une ouverture étant prévue dans la paroi de la cuve pour que ledit espace communique avec l'extérieur pour permettre l'évacuation du gaz pompé, caractérisé en ce que le gaz d'antibruit est introduit de l'extérieur de la cuve dans le dispositif mélangeur grâce à une canalisation traversant la paroi de la cuve.

L'invention sera mieux comprise et d'autres avantages apparaîtront grâce à la description qui va suivre, donnée à titre non limitatif, accompagnée des dessins annexés parmi lesquels :
- la figure 1 représente schématiquement un banc de détection de fuites connu,
- la figure 2 représente schématiquement une pompe à huile pour renouveler le joint d'huile, cette pompe étant équipé d'un système antibruit.

La figure 1 représente donc un banc de détection de fuites comprenant une station de pompage, entourée d'un rectangle A en traits discontinus, comprenant une pompe à palettes 1, une vanne d' isolement 2 de la pompe, une vanne d'entrée d'air 3 et une prise de branchement 4 destinée à être reliée à une enceinte à tester. Un analyseur de gaz 5 est relié à la station de pompage par une conduite d'entrée munie d'une vanne d'introduction 6.

La pompe à palettes 1 comprend un rotor 7 et un stator 8. Le stator 8 est placé dans une cuve 9 partiellement remplie d'huile 10.

Un conduit d'aspiration 11 relie l'intérieur du stator à l'extérieur de la cuve et un canal d'échappement 12 relie l'intérieur du stator à l'intérieur de la cuve par l'intermédiaire d'une soupape anti-retour 13. La cuve 9 communique par une ouverture 14, à l'extérieur. Une conduite de liaison 15 relie la prise de branchement 4 au conduit d'aspiration 11. Ce conduit est muni de la vanne d'isolement 2. La vanne d'entrée d'air 3 est située entre la prise de branchement 4 et la vanne d'isolement 3 et elle permet la communication de l'extérieur avec la conduite de liaison 15.

Selon l'invention, on utilise donc pour renouveler le joint d'huile de la pompe à vide, un dispositif de lubrification forcée comprenant une pompe à huile et équipé d'un système antibruit. On constitue un système antibruit en mélangeant du gaz à l'huile de lubrification. Ce gaz antibruit est avantageusement de l'air.

La pompe à l'huile est avantageusement disposée dans la cuve à huile. Le type de pompe à huile est indifférent pour le dispositif de pompage selon l'invention. On peut par exemple utiliser également une pompe à palettes, les axes des rotors de la pompe à vide et de la pompe à huile étant confondus, ce qui permet de les démarrer et de les arrêter en même temps.

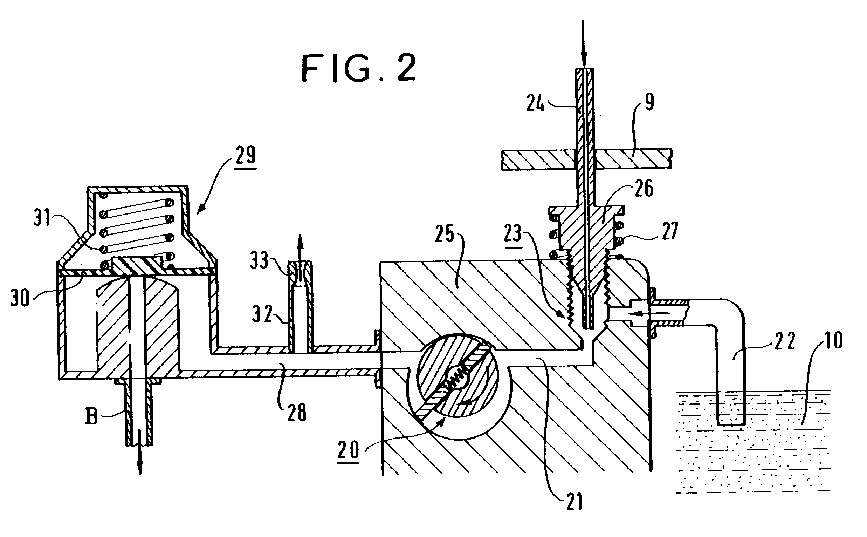

La figure 2 représente de façon schématique la pompe à huile équipée du système antibruit et associée à la pompe à vide, l'ensemble étant placé à l'intérieur de la cuve 9 dont on n'a représenté qu'un fragment de paroi. La pompe à huile 20 aspire, par le conduit d'aspiration 21, un mélange constitué d'huile de cuve 10 et d'un gaz, l'air par exemple.

Lors du fonctionnement, l'huile aspirée par la pompe 20 et injectée par le tube de prise d'huile est mise en vitesse par l'intermédiaire d'un tube de Venturi 23. La canalisation 24 traverse la paroi de la cuve 9 et permet d'introduire de l'air non pollué. A son extrémité intérieure à la cuve, la canalisation 24 est vissée sur le corps 25 de la pompe à huile. Le tube de Venturi 23, réalisé également dans le corps de pompe, communique d'un côté avec la canalisation 24 et le tube de prise d'huile 22 et, de l'autre côté, avec le conduit d'aspiration 21.

A l'extrémité de la canalisation 24 d'admission de l'air, dans le tube de Venturi, se crée une dépression. Celle-ci est due au pompage de l'air par les nappes d'huile en mouvement. On assure ainsi le gazage de l'huile de lubrification, donc l'antibruit de la pompe.

L'introduction de gaz antibruit dans la pompe à huile affecte sa pression limite. On réalise en fait un compromis entre le niveau sonore et la pression limite de la façon suivante. En vissant la tête 26 de la canalisation 24 d'admission de l'air, on augmente la vitesse de l'huile dans le tube de Venturi, donc la quantité d'air injecté. Le niveau sonore décroît mais la pression limite augmente. En dévissant la tête 26, on diminue la vitesse dans le tube de Venturi, donc la quantité d'air injecté. Le niveau sonore croît mais la pression limite diminue. Ce réglage peut se faire, dispositif de pompage en fonctionnement, par l'orifice de remplissage en huile de la cuve. Un ressort 27, disposé entre la tête 26 et le corps de pompe 25, contribue à un bon réglage du système antibruit.

Le mélange huile-air est introduit dans la pompe à vide, pour constituer le joint d'huile, grâce à la conduite 28 et au dispositif anti-retour 29. Il pénètre dans la chambre de compression de la pompe à vide au point B (voir la figure 1).

Lors du pompage d'un gaz spécifique (l'hélium par exemple) par l'aspiration de la pompe à vide, ce gaz est refoulé dans la cuve à huile. L'air pompé par la canalisation d'antibruit est également refoulé dans la cuve à huile, cependant cet air n'est pas ou est très peu chargé de gaz spécifique. Grâce à l'ouverture 14 de la cuve, on assure ainsi une dépollution de l'espace de cuve situé au-dessus du niveau de l'huile.

Ceci permet d'obtenir :
- à l'aspiration de la pompe à vide, une pression partielle de gaz pompé très faible du fait du non-recyclage de celui-ci ;
- la dilution et l'entraînement du gaz pompé hors de la cuve à huile donc une dépollution de la pompe.

En cas d'arrêt du dispositif de pompage, le dispositif anti-retour 29, comprenant une membrane 30 et un ressort 31, obstrue l'entrée d'huile dans la pompe à vide et, de ce fait, celle des gaz d'antibruit.

A la conduite 28 on peut raccorder un tube 32 la reliant à un gicleur d'amorçage 33 de la pompe à huile.

Dans l'application de ce dispositif de pompage aux détecteurs de fuites à hélium on peut, en fixant l'extrémité de la canalisation 24 qui est externe à la cuve sur le panneau du détecteur :
- lors d'un démarrage du détecteur, sans réaliser de branchement "vide", saturer par un jet d' hélium le voisinage de cette extrémité externe et assurer ainsi une pollution rapide du circuit de pompage en hélium, ce qui permet de tester le bon fonctionnement de la cellule hélium de l'appareil. On gagne ainsi sur les temps de mise en route et de contrôle de l'appareil ainsi que sur le temps entre deux mesures ;
- lors de l'attente de la récupération de l'appareil après sa saturation en hélium, l'envoi d'une bouffée d'air comprimé par cette extrémité externe permet de balayer presque instantanément le circuit de vide de l'hélium résiduel.

L'invention permet l'utilisation d'une pompe à palettes et à joint d'huile au pompage des gaz légers sans modification majeur du dispositif de pompage, sans adjonction d'autre matériel et sans modification du fonctionnement pour un utilisateur.

Pour une application aux détecteurs de fuites à hélium, l'invention permet des gains de temps lors de l'utilisation.

## Revendications

1. Dispositif de pompage d'un gaz par une pompe à vide du type à palettes et à joint d'huile (1), la pompe à vide étant plongée dans une cuve (9) fermée et partiellement remplie d'huile (10), le dispositif comprenant également une pompe à huile (20) pour renouveler le joint d'huile et disposée dans la cuve, la pompe à huile étant équipée d'un dispositif antibruit permettant de mélanger de l'huile destinée à constituer le joint d'huile à un gaz d'antibruit, le pompage du gaz par la pompe à vide se faisant par une conduite d'aspiration traversant la paroi de la cuve, le refoulement du gaz pompé par la pompe à vide se faisant par une soupape anti-retour (13) dans l'espace (19) de la cuve situé au-dessus du niveau de l'huile de remplissage (10), une ouverture (14) étant prévue dans la paroi de la cuve pour que ledit espace communique avec l'extérieur pour permettre l'évacuation du gaz pompé, caractérisé en ce que le gaz d'antibruit est introduit de l'extérieur de la cuve dans le dispositif mélangeur grâce à une canalisation (24) traversant la paroi de la cuve (9).

2. Dispositif de pompage selon la revendication 1, caractérisé en ce que la pompe à huile (20) est une pompe à palettes.

3. Dispositif de pompage selon l'une des revendications 1 ou 2, caractérisé en ce que le mélange d'huile et de gaz d'antibruit se fait dans un tube de Venturi (23).

4. Dispositif de pompage selon l'une quelconque des revendications 1 à 3, caractérisé en ce qu'un système anti-retour (29) est disposé dans le circuit de renouvellement de joint d'huile, entre la pompe à huile (20) et le point de pénétration (B) dans la pompe à vide.

5. Détecteur de fuites à hélium comportant une station de pompage (A) et un analyseur d'hélium (5), caractérisé en ce que la station de pompage comprend un dispositif de pompage selon l'une quelconque des revendications 1 à 4.

## Claims

1. Pumping apparatus for pumping a gas by means of a vacuum pump of vane-and-oil-seal type (1), the vacuum pump being immersed in a tank (9) which is closed and which is partially filled with oil (10), the apparatus also including an oil pump (20) for renewing the oil seal and located in the tank, the oil pump being equipped with a noise-reducing mixing device enabling the oil for constituting the oil seal to be mixed with a noise-reducing gas, the gas being pumped by the vacuum pump via a suction duct passing through the wall of the tank, the pumped gas being delivered by the vacuum pump via a non-return valve (13) into the space (19) in the tank that is situated above the level of the filling oil (10), an opening (14) being provided through the wall of the tank so that said space communicates with the outside so that the pumped gas may be removed, said pumping apparatus being characterized in that the noise-reducing gas is fed from the outside of the tank to the mixing device by means of a pipe (24) passing through the wall of the tank (9).

2. Pumping apparatus according to claim 1, characterized in that the oil pump (20) is a vane pump.

3. Pumping apparatus according to claim 1 or 2, characterized in that the oil and the noise-reducing gas are mixed in a Venturi tube (23).

4. Pumping apparatus according to any one of claims 1 to 3, characterized in that a non-return system (29) is disposed in the circuit for renewing the oil seal, between the oil pump (20) and the point of entry (B) into the vacuum pump.

5. A helium leak detector including a pumping unit (A) and a helium analyzer (5), characterized in that the pumping unit includes pumping apparatus according to any one of claims 1 to 4.

## Patentansprüche

1. Pumpvorrichtung für ein Gas mit einer eine Öldichtung aufweisenden Drehschieberpumpe (1), die in eine geschlossene und teilweise mit Öl (10) gefüllte Wanne (9) eingetaucht ist, wobei die Vorrichtung weiter in der Wanne zur Erneuerung der Öldichtung eine Ölpumpe (20) aufweist, die eine Geräuschunterdrückungsvorrichtung enthält, in der das für die Öldichtung bestimmte Öl mit einem Gerätschunterdrückungsgas gemischt werden kann, wobei die Vakuumpumpe Gas über eine die Wand der Wanne durchquerende Saugleitung ansaugt und über ein Rückschlagventil (13) in den Raum (19) oberhalb des Ölspiegels (10) in der Wanne ausstößt, und wobei eine Öffnung (14) in der Wand der Wanne vorgesehen ist, über die dieser Raum mit der Außenumgebung in Verbindung steht, um das gepumpte Gas abzuführen, dadurch gekennzeichnet, daß das Geräuschunterdrückungsgas von außerhalb der Wanne in die Mischvorrichtung durch eine die Wand der Wanne (9) durchquerende Leitung (24) eingespeist wird.

2. Pumpvorrichtung nach Anspruch 1, dadurch gekennzeichnet, daß die Ölpumpe (20) eine Drehschieberpumpe ist.

3. Pumpvorrichtung nach einem der Ansprüche 1 oder 2, dadurch gekennzeichnet, daß die Mischung aus Öl und Geräuschunterdrückungsgas in einem Venturi-Rohr (23) erfolgt.

4. Pumpvorrichtung nach einem beliebigen der Ansprüche 1 bis 3, dadurch gekennzeichnet, daß ein Rückschlagsystem (29) in der Leitung zur Erneuerung der Öldichtung zwischen der Ölpumpe (20) und dem Punkt (B) liegt, an dem sie in die Vakuumpumpe eindringt.

5. Heliumleckdetektor mit einer Pumpstation (A) und einem Heliumanalysator (5), dadurch gekennzeichnet, daß die Pumpstation eine Pumpvorrichtung nach einem beliebigen der Ansprüche 1 bis 4 enthält.
